# EUROPEAN PATENT APPLICATION

(11) **EP 2 108 436 A1**
(43) Date of publication of application: **14.10.2009**
(21) Application number: 09250990.0
(22) Date of filing: 31.03.2009
(51) Int. Cl.: B01D 46/24

(54) **Honeycomb structure and method for manufacturing the same**

(30) Priority: 02.04.2008 JP 2008096478; 06.03.2009 JP 2009053039
(71) Applicant: NGK Insulators, Ltd., Aichi Pref. 467-8530 (JP)
(72) Inventor: Ogura, Yutaka, Nagoya City, Aichi-ken 467-8530 (JP)
(74) Representative: Paget, Hugh Charles Edward

(57) **Abstract**

A honeycomb structure 100 includes: a honeycomb structured portion 4 having partition walls separating and forming a plurality of cells 1 functioning as fluid passages and extending through from one end face 6 to the other end face 7 and having a plurality of partial segments 3 separated and formed by a plurality of slits 2 extending in a cell extension direction and not reaching at least one of the end faces, and a buffer portions 5 formed by filling a filler in the whole slits 2. The honeycomb structured portion 4 preferably has a plurality of partial segments 3 separated and formed by the plurality of slits 2 extending from the one end face in a cell extension direction and not reaching the other end face 7. The honeycomb structure has excellent thermal shock resistance.

## Description

### Background of the Invention and Related Art Statement

The present invention relates to a honeycomb structure and a method for manufacturing the honeycomb structure. More specifically, the present invention relates to a honeycomb structure excellent in thermal shock resistance and a method for manufacturing a honeycomb structure, the method capable of manufacturing the honeycomb structure efficiently in good raw material yield.

There is employed a ceramic honeycomb structure excellent in thermal shock resistance and corrosion resistance as a carrier for a catalyst apparatus used for environmental measures, collection of specific substance, or the like, or as a filter in various fields such as chemistry, electric power, and iron and steel. Particularly, in recent years, a honeycomb structure has frequently been employed as a diesel particulate filter (DPF) for trapping particulate matter (PM) discharged from a diesel engine or the like by plugging the opening portions of cells alternately on both the end faces. As a material for the honeycomb structure used at high temperature in a corrosive gas atmosphere, there is suitably used silicon carbide (SiC) cordierite, aluminum titanate (Al₂TiO₅), or the like, which are excellent in thermal resistance and chemical stability.

Since silicon carbide has relatively high thermal expansion coefficient, a honeycomb structure formed by using silicon carbide as the framework sometimes has a defect due to a thermal shock upon use when a large structure is formed. In addition, a defect is sometimes caused by a thermal shock upon combusting and removing trapped particulate matter. Therefore, when a honeycomb structure having a larger-than-predetermined size is formed by using silicon carbide as the framework, a plurality of small segments of a plugged honeycomb structure are manufactured, and they are bonded to form a large plugged honeycomb structure. The segments are bonded together with a bonding material, which is applied on side faces of predetermined segments to bond a plurality of segments at the side faces (see, e.g., JP-A-8-28246)

In the case of manufacturing a cylindrical or an oval honeycomb structure by such a method, it is necessary to perform a coarse machining (coarse machining means grinding a quadrangular prism block formed by bonding a plurality of rectangular parallelepiped segments into a cylindrical shape.) on the outer periphery using an apparatus such as a bear's-saw and grinding (grinding means polishing to have required dimensional precision after the coarse machining) using an apparatus such as a cam grinder to obtain a cylindrical or an oval honeycomb structure. Therefore, there arise problems that an extra step such as an outer periphery coarse machining step is required and that the raw material yield is not high because the outer periphery is subjected to coarse machining. In addition, even in a honeycomb structure formed by bonding honeycomb segments, internal heat generation upon combusting and removing particulate matter is large, and therefore a crack is prone to be caused inside the honeycomb structure. Further, in a honeycomb structure formed by bonding honeycomb segments, pressure loss is prone to be large when a fluid is allowed to flow into the cells since the portion where the segments are bonded becomes thick.

### Summary of the Invention

The present invention has been made in view of the above problems and aims to provide a honeycomb structure excellent in thermal shock resistance and a method for manufacturing a honeycomb structure, the method being capable of manufacturing the honeycomb structure efficiently in good raw material yield.

In order to solve the aforementioned problems, the present invention provides the following honeycomb structure and the following method for manufacturing the honeycomb structure.

[1] A honeycomb structure comprising: a honeycomb structured portion having partition walls separating and forming a plurality of cells functioning as fluid passages and extending through from one end face to the other end face and having a plurality of partial segments separated and formed by a plurality of slits extending in a cell extension direction and not reaching at least one of the end faces, and buffer portions formed by filling a filler in the whole slits.

[2] The honeycomb structure according to [1], wherein the honeycomb structured portion has a plurality of partial segments separated and formed by the plurality of slits extending from the one end face in a cell extension direction and not reaching the other end face.

[3] The honeycomb structure according to [1] or [2], wherein a length of the slits extending in the cell extension direction in the honeycomb structured portion is 25 to 99% of a length of the honeycomb structured portion in a central axial direction.

[4] The honeycomb structure according to any one of [1] to [3], wherein the partial segment having the largest area in a cross section perpendicular to the cell extension direction of the honeycomb structured portion among the partial segments constituting an outer periphery of the honeycomb structured portion has an area larger than that of the partial segment having the smallest area among the other partial segments locating in the central portion of the honeycomb structured portion.

[5] The honeycomb structure according to any one of [1] to [4], wherein the slits are formed by leaving without cutting an outermost peripheral portion of the honeycomb structured portion.

[6] The honeycomb structure according to [1], wherein a plurality of partial segments are separated and formed by a plurality of slits extending in the central axial direction and reaching neither the one end face nor the other end face in the honeycomb structured portion.

[7] The honeycomb structure according to any one of [1] to [6], having an expansion coefficient of 1×10⁻⁶/°C or more.

[8] The honeycomb structure according to any one of [1] to [7], wherein opening portions of predetermined cells on one end face and opening portions of the other cells on the other end face are plugged.

[9] A method for manufacturing a honeycomb structure, the method comprising the steps of:
extrusion-forming a forming raw material to obtain a honeycomb formed article having partition walls for separating and forming a plurality of cells functioning as fluid passages and extending from one end face to the other end face, forming a plurality of slits extending in the cell extension direction and not reaching at least one of the end faces so as to separate and form a plurality of partial segments in the honeycomb formed article to obtain a honeycomb structure with slits, and forming buffer portions disposed so as to infill the slits by filling a filler into the slits in the honeycomb structure with slits to obtain a honeycomb structure.

[10] The method for manufacturing a honeycomb structure according to [9], wherein the plurality of slits are formed by starting cutting from a side face of the honeycomb formed article.

Since a honeycomb structure of the present invention is provided with a honeycomb structured portion having a plurality of partial segments separated and formed by a plurality of slits extending in a cell extension direction and not reaching at least one of the end faces and buffer portions formed by filling a filler in the slits, a partial segment can be made small even for a large honeycomb structure, thereby inhibiting the partial segments from being damaged due to a thermal shock. In addition, since spaces (slits) between partial segments are filled with a buffer portion, the honeycomb structure has high thermal shock resistance as a whole. Further, since there is a portion having no slit or buffer portion on at least one end face side of the honeycomb structure, pressure loss when a fluid is allowed to flow into the cells can be reduced.

According to a method for manufacturing a honeycomb structure of the present invention, since a honeycomb structure is formed by obtaining a honeycomb formed article by extrusion-forming, forming slits so as to separate and form partial segments, and forming buffer portions so as to fill the slits, a coarse machining step is unnecessary, and a raw material yield can be improved drastically.

### Brief Description of the Drawings

[Fig. 1] Fig. 1 is a perspective view schematically showing an embodiment of a honeycomb structure of the present invention.

[Fig. 2] Fig. 2 is a perspective view schematically showing another embodiment of a honeycomb structure of the present invention.

[Fig. 3] Fig. 3 is a plan view from one end face side, schematically showing still another embodiment of a honeycomb structure of the present invention.

[Fig. 4] Fig. 4 is a plan view from one end face side, schematically showing still another embodiment of a honeycomb structure of the present invention.

[Fig. 5] Fig. 5 is a plan view from one end face side, schematically showing still another embodiment of a honeycomb structure of the present invention.

[Fig. 6] Fig. 6 is a plan view from one end face side, schematically showing still another embodiment of a honeycomb structure of the present invention.

[Fig. 7] Fig. 7 is a plan view from one end face side, schematically showing still another embodiment of a honeycomb structure of the present invention.

[Fig. 8] Fig. 8 is a perspective view schematically showing still another embodiment of a honeycomb structure of the present invention.

[Fig. 9] Fig. 9 is a perspective view schematically showing a process of forming a honeycomb structure in an embodiment of a method for manufacturing a honeycomb structure of the present invention.

[Fig. 10A] Fig. 10A is a plan view showing a part of one end face of an embodiment of a honeycomb structure of the present invention and schematically showing a state that partition walls are cut by a slit.

[Fig. 10B] Fig. 10B is a plan view showing a part of one end face of an embodiment of a honeycomb structure of the present invention and schematically showing a state that partition walls are cut by a slit.

[Fig. 10C] Fig. 10C is a plan view showing a part of one end face of an embodiment of a honeycomb structure of the present invention and schematically showing a state that partition walls are cut by a slit.

[Fig. 11A] Fig. 11A is a plan view showing a part of one end face of an embodiment of a honeycomb structure of the present invention and schematically showing a state that partition walls are cut by a slit.

[Fig. 11B] Fig. 11B is a plan view showing a part of one end face of an embodiment of a honeycomb structure of the present invention and schematically showing a state that partition walls are cut by a slit.

[Fig. 12] Fig. 12 is a perspective view schematically showing still another embodiment of a honeycomb structure of the present invention.

[Fig. 13] Fig. 13 is a plan view from one end face side, schematically showing a honeycomb structure manufactured in Example 1.

[Fig. 14] FIG. 14 is a schematic view showing a cross section of a honeycomb structure manufactured in Comparative Example 5 parallel to a central axis.

[Fig. 15] FIG. 15 is a schematic view showing a cross section of a honeycomb structure manufactured in Comparative Example 9 parallel to a central axis.

### Reference Numerals

1: cell, 2: slit, 3: partial segment, 3a: partial segment constituting outer periphery, 3b: partial segment locating in central portion, 4: honeycomb structured portion, 5: buffer portion, 6: end face on one side, 7: end face on the other side, 11: thick portion, 12: outermost peripheral portion, 21: space, 22: central portion, 100, 110, 120, 130, 140, 150, 160, 170, 180: honeycomb structure, 200: honeycomb formed article, 210: honeycomb fired article, 220: honeycomb structure with slits, 230, 330, 410, 420: honeycomb structure, D: depth of space.

### Detailed Description of the Invention

Next, embodiments of the present invention will be described in detail with referring to Drawings. However, the present invention is by no means limited to the following embodiments, and it should be understood that changes, improvements, or the like of the design may appropriately be made on the basis of ordinary knowledge of a person of ordinary skill within the range of not deviating from the gist of the present invention.

### (1) Honeycomb structure:

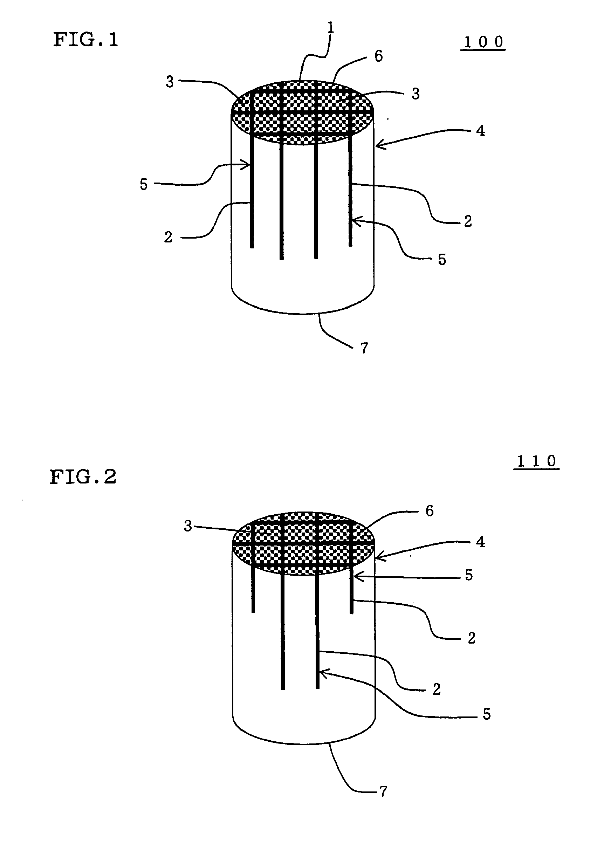

As shown in Fig. 1, an embodiment of a honeycomb structure of the present invention is provided with a honeycomb structured portion 4 having partition walls separating and forming a plurality of cells 1 functioning as fluid passages and extending through from one end face 6 to the other end face 7 and having a plurality of partial segments 3 separated and formed by a plurality of slits 2 extending in the cell extension direction (the central axial direction) from the end face 6 and not reaching the other end face 7, and buffer portions 5 formed by filling a filler in the slits 2. In the honeycomb structure of the present embodiment, the slits 2 reach the one end face 6 (cut the one end face 6) and do not reach the other end face 7. However, the slits 2 may be slits which do not reach at least an end face. Here, the "partial segments" mean segments separated and formed by forming the slits extending in the cell extension direction (in parallel with the central axis) in the structure and include both the partial segments connected with each other on the other end face by the portion remained without slits being formed on the other end face and the partial segments connected with each other on both the end face side (in both the end portions) by the portions remained without slits being formed on both the end faces. Fig. 1 is a perspective view schematically showing an embodiment of a honeycomb structure of the present invention. Incidentally, in the drawings, the same reference numerals are used for the common structural elements.

In the honeycomb structure 100 of the present embodiment, since a plurality of partial segments 3 are separated and formed as described above, small partial segments 3 can be formed, and the partial segments 3 can be inhibited from being damaged due to a thermal shock. Further, since the partial segments 3 are formed by means of buffer portions 5, thermal expansion of the partial segments 3 can be buffered by the buffer portions 5 to inhibit the partial segments 3 from being damaged.

A length of the slits 2 (slit depth) in the central axial direction in the honeycomb structured portion 4 is preferably 25% ore more, more preferably 25 to 99%, particularly preferably 25 to 75% of a length of the honeycomb structured portion in a central axial direction. In the case of combusting and removing particulate matter after particulate matter is trapped by the honeycomb structure, the region having the highest temperature is present in the range from the end face on the gas outlet side to 25% length (excluding the position of 25%) of the length in the central axial direction of the honeycomb structure. Therefore, in the case that gas is allowed to flow into the honeycomb structure 100 of the present embodiment from the other end face 7 and flow out from the one end face 6 on one side, since partial segments 3 are present in the region having the highest temperature and a large thermal shock because the slits 2 are formed to have a length of 25% or more of the length in the central axial direction of the honeycomb structure 4 from the one end face 6, the honeycomb structure 100 can be inhibited from being damaged more effectively. In addition, when the slits 2 are formed thoroughly (from the one end face 6 to the other end face7) in the central axial direction of the honeycomb structured portion 4, since the buffer portions 5 are disposed in the slits 2, pressure loss may be increased when a fluid is allowed to pass through the honeycomb structure 100. In contrast, when the slits 2 have a length of 99% or less of the length in the central axial direction of the honeycomb structure 4, since the slits 2 and the buffer portions 5 disposed in the slits 2 are not present in the range of 1% or more on the other end face side of the honeycomb structure 4, increase in pressure loss can be suppressed. In addition, a honeycomb structure 100 shown in Fig. 1 is provided with four parallel slits 2 formed at regular intervals and three parallel slits 2 formed at regular intervals in a direction perpendicular to the four parallel slits 2.

In addition, as shown in Fig. 2, the slits 2 passing in the vicinity of the central axis of the honeycomb structure 110 may be formed to be long in the central axial direction, and the slits 2 passing in the vicinity of the outer periphery may be formed to be short. In the honeycomb structure 110 shown in Fig. 2, the slit passing through the central axis is formed to be long in the central axial direction. When particulate matter trapped by the honeycomb structure is combusted and removed, the periphery of the central axis has higher temperature than that in the vicinity of the outer periphery. Therefore, such formation of slits can effectively inhibit partial segments 3 in the vicinity of the central axis from being damaged. Here, a "slit passing in the vicinity of the central axis" means a slit passing in the range of 50% of a radius of the outer peripheral circle from the center in a cross section perpendicular to the central axis in the case that the honeycomb structure has a cylindrical shape. Fig. 2 is a perspective view schematically shown another embodiment of a honeycomb structure of the present invention.

Regarding the size of the partial segment 3, an area of a cross section perpendicular to the central axial direction is preferably 3 to 16 cm², more preferably 7 to 13 cm². When the area is less than 3 cm², since the buffer portions, where gas does not circulate or hardly circulates, increases, pressure loss when gas circulates in the honeycomb structure may be increased. When it is above 16cm², the effect in inhibiting the partial segments 3 from being damaged may be reduced.

Thickness (width) of the slits 2 is preferably 0.3 to 3.0 mm, more preferably 1.0 to 1.5 mm. When it is less than 0.3 mm, the buffer effect between the partial segments 3 and 3 may be reduced. When it is above 3.0 mm, pressure loss when gas circulates in the honeycomb structure may be large.

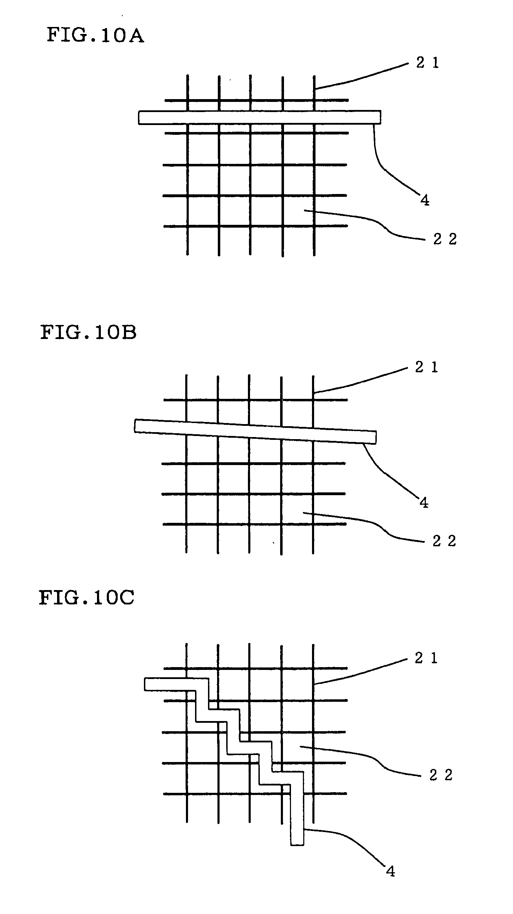

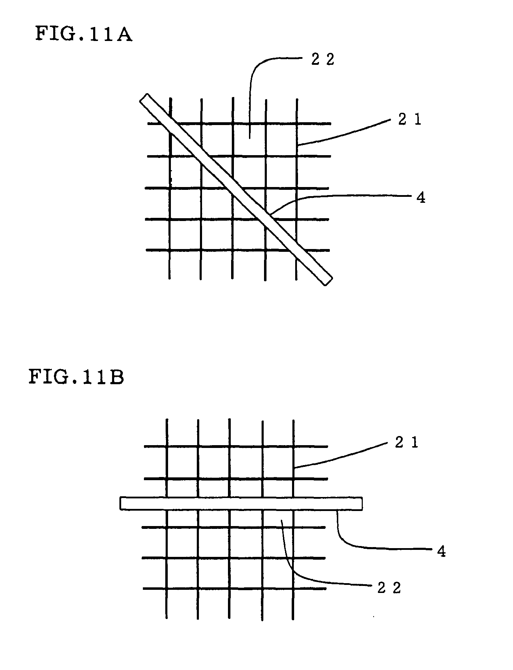

In the honeycomb structured portion 4 of the honeycomb structure of the present embodiment, it is preferable that the partition walls where the slits 2 are formed are formed to be thick and that the slits are formed so as to cut the thick partition walls (thick portions). It is also preferable to form a cut so as to disconnect the partition walls without forming the thick portions. For example, as shown in Fig. 10A, the slit 2 may be formed so as to cut the partition walls 21 forming a row of cells 22 along the row of the cells 22. In addition, as shown in Fig. 10B, the slit 2 may be formed so as to cut the partition walls 21 forming two rows of cells 22 along the two rows of cells. Further, as shown in Fig. 10C, the slit 2 may be formed so as to cut the partition walls 21 forming the cells 22 in a zig-zag manner. As shown in Fig. 11A, the slits 2 may be formed so as to cut the intersections of the partition walls 21 along the diagonals of the cells. In addition, as shown in Fig. 11B, the slit 2 may be formed so as to cut the partition walls 21 forming a row of cells 22 formed widely along the row of the cells 22. Each of Figs. 10A to 10C, 11A, and 11B shows a portion of an end face on one side of an embodiment of a honeycomb structure of the present invention and is a plan view schematically shown the state that the partition walls 21 are cut by the slit 2. Though each of Figs. 10A to 10C, 11A, and 11B shows an unplugged honeycomb formed article, it is preferable to cut the partition walls in a similar manner even in the case of forming a cut in a plugged honeycomb structure subjected to plugging.

It is preferable that thickness (thickness on the assumption that no slit is formed) of the thick portion in the case of forming a slit in the thick portion is larger than that of the slit, preferably 1.3 to 4.0 mm, more preferably 2.0 to 2.5 mm. When it is thicker than 4.0, pressure loss may increase. When it is thinner than 1.3 mm, it may be difficult to form a slit.

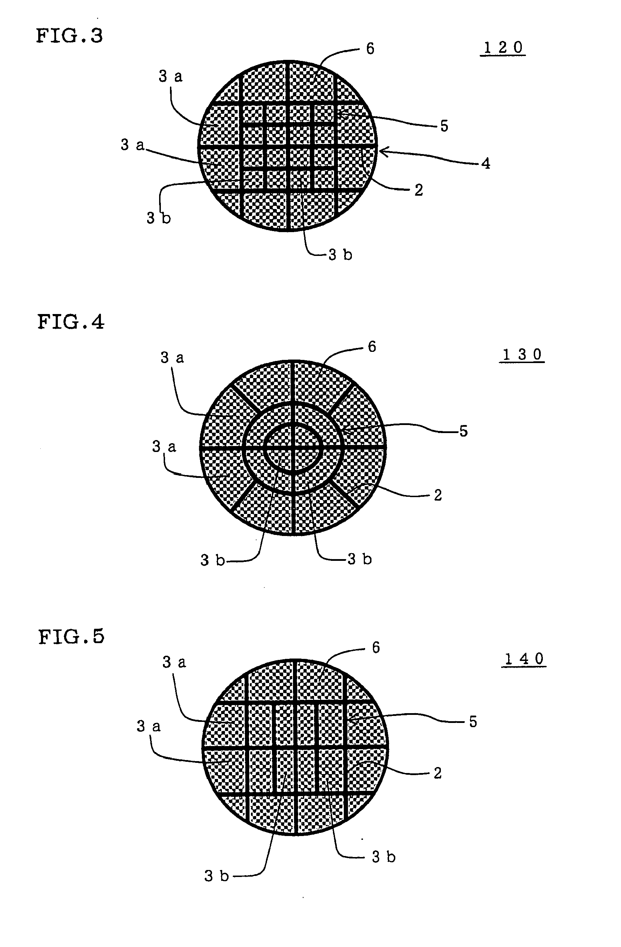

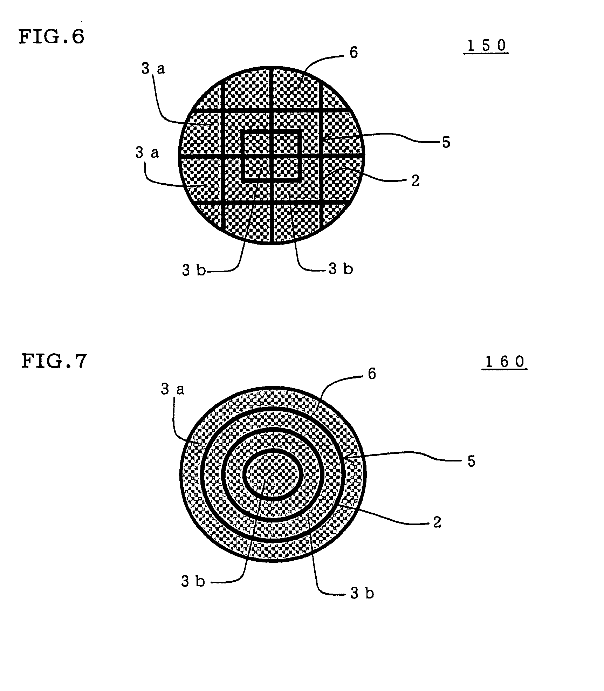

In addition, as the honeycomb structures shown in Figs. 3 to 7, it is preferable that the partial segment having the largest area in a cross section perpendicular to the cell extension direction of the honeycomb structured portion (in the end face where slits are formed when slits are formed on only one end face) among the partial segments constituting an outer periphery of the honeycomb structured portion has an area larger than that of the partial segment having the smallest area among the other partial segments locating in the central portion of the honeycomb structured portion. In the case of combusting and removing particulate matter trapped by the honeycomb structure, the remaining partial segments 3b located in the central portion (partial segments located in the central portion) has higher temperature than the partial segments 3a constituting the outer periphery. Therefore, by disposing partial segments having a small area in the central portion, the partial segments located in the central portion can effectively be inhibited from being damaged. Here, the "partial segments located in the central portion" mean the partial segments obtained by excluding the partial segments constituting the outer periphery of the honeycomb structure from the whole partial segments. Thus, when the area of the partial segments located in the central portion on one end face is thus small, pressure loss of the honeycomb structure tends to increase. Therefore, it is particularly preferable that the length of the slits 2 in the central axial direction of the honeycomb structured portion 4 is 25 to 75% of the honeycomb structured portion 4 in the cell extension direction (central axial direction). By setting the length of the slits 2 in the central axial direction of the honeycomb structured portion 4 to 75% or less, increase in pressure loss can be reduced drastically. In the honeycomb structure 120 shown in Fig. 3, the partial segments 3b located the central portion of the one end face 6 have a shape of finely separated squares to be smaller than the partial segments 3a constituting the outer periphery. To put it the other way around, the partial segments 3a are larger than the partial segments 3b. In the honeycomb structure 130 shown in Fig. 4, each of the partial segments 3b located in the central portion on the end face 6 on one side has a small fan shape to be smaller than the partial segments 3a constituting the outer periphery. To put it the other way around, the partial segments 3a are larger than the partial segments 3b. In the honeycomb structure 140 shown in Fig. 5, the partial segments 3b located the central portion of the one end face 6 have a shape of finely separated rectangles to be smaller than the partial segments 3a constituting the outer periphery. To put it the other way around, the partial segments 3a are larger than the partial segments 3b. In the honeycomb structure 150 shown in Fig. 6, the partial segments 3b located the central portion of the one end face 6 have a shape of finely separated squares to be smaller than the partial segments 3a constituting the outer periphery. To put it the other way around, the partial segments 3a are larger than the partial segments 3b. In the honeycomb structure 160 shown in Fig. 7, the partial segments 3b located the central portion of the one end face 6 have a small circular shape to be smaller than the partial segments 3a constituting the outer periphery. To put it the other way around, the partial segments 3a are larger than the partial segments 3b. Each of Figs. 3 to 7 is a plan view from the one end face side, schematically showing still another embodiment of a honeycomb structure of the present invention.

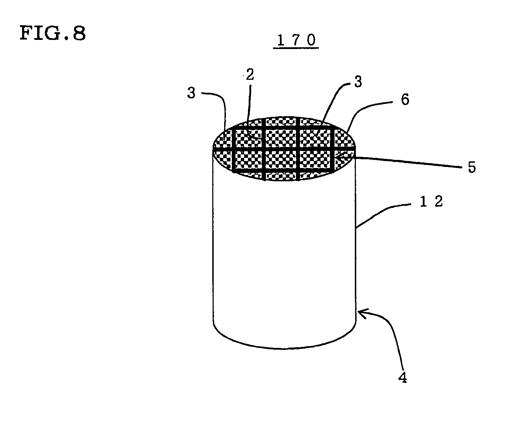

In addition, in a honeycomb structure of the present invention, slits 2 may be formed without cutting the outermost peripheral portion 12 of a honeycomb structured portion 4 as a honeycomb structure 170 shown in Fig. 8. Fig. 8 is a perspective view schematically showing another embodiment of a honeycomb structure of the present invention. Since the outermost peripheral portion 12 is left without being cut, the honeycomb structure 170 has a structure where the outer peripheral wall without slits 2 is formed so as to surround all the partial segments, where no buffer portion is exposed to the outermost peripheral portion. Therefore, in the manufacturing process, it is not necessary to perform outer periphery grinding or outer periphery coating, and therefore production efficiency can further be improved. In the case of hoping to make a smoother outer peripheral face by reducing unevenness of the outer peripheral face, it is preferable to perform outer periphery-grinding and/or outer periphery-coating. A formation pattern (structure) of the slits 2 may be a shape where the partial segments 3 locating on the outermost side are connected with the outermost peripheral portion 12 as shown in Fig. 8 or a shape where a circular slit 2 is formed inside (inner side of the outermost peripheral portion) along the outermost peripheral portion to separate the partial segments 3 locating on the outermost side from the outermost peripheral portion 12. Incidentally, a honeycomb structure 170 shown in Fig. 8 has a slit formation pattern (structure) in the one end face 6 is similar to that of the honeycomb structure 100 shown in Fig. 1. However, there may be employed a slit formation pattern as in the honeycomb structures 120, 130, 140, 150, and 160 shown in Figs. 3 to 7, the honeycomb structure 180, and another slit formation pattern. The slit formation pattern shows how to separate partial segments.

It is preferable that the outermost peripheral portion 12 left without being cut (without forming a slit) has a thickness of 0.1 to 4.0 mm, and more preferably 0.3 to 1.0 mm. When the thickness is below 0.1 mm, the outermost peripheral portion may easily be damaged when the honeycomb structure obtained is used or the like in a step after forming the slits. When the thickness is above 4.0 mm, pressure loss may increase.

In addition, the honeycomb structure 100 has a thermal expansion coefficient of 1×10-6/°C or more, more preferably 2×10⁻⁶ to 7×10⁻⁶/°C. A honeycomb structure of a present invention has high thermal shock resistance even with high thermal expansion coefficient.

A honeycomb structured portion 4 constituting the honeycomb structure 100 of the present embodiment may have a desired shape such as a cylindrical shape and an oval shape. As the size of the honeycomb structured portion 4, when the honeycomb structure has a cylindrical shape, the bottom face has a radius of preferably 18 to 250 mm, more preferably 50 to 150 mm. In addition, the honeycomb structured portion 4 has a length in the central axial direction of preferably 80 to 400 mm, more preferably 100 to 310 mm. The material of the honeycomb structured portion 4 is preferably ceramic, more preferably at least one kind selected from the group consisting of silicon carbide, silicon-silicon carbide based composite material, cordierite, mullite, alumina, spinel, silicon carbide-cordierite based composite material, lithium aluminum silicate, aluminum titanate, and iron-chrome-aluminum based alloy because of excellent strength and thermal resistance. Of these, silicon carbide or silicon-silicon carbide based composite material is particularly preferable. Since silicon carbide has a relatively large thermal expansion coefficient, a honeycomb structure formed using silicon carbide as the framework sometimes had a defect by a thermal shock upon use when a large sized structure was formed. However, as a honeycomb structure of the present invention, by disposing buffer portions by forming a plurality of partial segments by a plurality of slits, small partial segments can be formed, and thermal expansion of silicon carbide can be buffered by the buffer portions, thereby exhibiting an effect in inhibiting a honeycomb structure from having a defect.

The honeycomb structured portion 4 is preferably porous. The honeycomb structured portion 4 has an open porosity of preferably 30 to 80%, more preferably 40 to 65%. By specifying the opening porosity within such a range, pressure loss can be reduced with maintaining strength. When the opening porosity is below 30%, pressure loss may increase. When the opening porosity is above 80%, strength and thermal conductivity may be reduced. The open porosity is measured by the Archimedes method.

The honeycomb structured portion 4 has an average pore diameter of 5 to 50 µm, more preferably 7 to 35 µm. By specifying the average pore diameter within such a range, particulate matter (PM) can effectively be trapped. When the average pore diameter is below 5 µm, clogging may easily be caused by the particulate matter (PM). When the average pore diameter is above 50 µm, particulate matter (PM) may pass through the filter without being trapped. The average pore diameter is measured by a mercury porosimeter.

When the material for the honeycomb structured portion 4 is silicon carbide, it is preferable that the silicon carbide particles have an average particle diameter of 5 to 100 µm. By specifying the average particle diameter, the porosity and pore diameter of the filter can easily be controlled suitably. When the average particle diameter is below 5 µm, the pore diameter may become too small, while, when it is above 100 µm, porosity may become too small. When the pore diameter is too small, clogging may easily caused by the particulate matter (PM). When the porosity is too small, pressure loss may increase. The average particle diameter of the raw material is measured according to JIS R 1629.

There is no particular limitation on the cell shape (cell shape in a cross section perpendicular to the central axial direction (cell extension direction) of the honeycomb structured portion 4) of the honeycomb structured portion 4, and examples of the shape include a triangle, a rectangle, a hexagon, an octagon, a circle, and a combination of these shapes. It is preferable that the honeycomb structured portion 4 has a partition wall thickness of 50 to 2000 µm. When the partition wall thickness is below 50 µm, the honeycomb structure may have reduced strength, while, when the partition wall thickness is above 2000 µm, pressure loss may increase. Though there is no particular limitation on the cell density of the honeycomb structured portion 4, it is preferably 0.9 to 311 cells/cm², more preferably 7.8 to 62 cells/cm².

The honeycomb structure 100 of the present embodiment is a plugged honeycomb structure wherein the openings of predetermined cells on one end face of the honeycomb structured portion 4 and the openings of the other cells on the other end face are plugged. Though it is preferable to plug the openings in such a manner, it is also possible that the openings are not plugged.

It is preferable that the buffer portions 5 constituting the honeycomb structure 100 of the present embodiment are disposed in such a manner that it is filled into the whole slits 2 (in such a manner that the whole slits is satisfied by it) of the honeycomb structured portion 4 (the whole slits 2 are filled with the buffer portions 5). Here, "the whole slits 2 are filled with the buffer portions 5" means that the whole spaces of slits 2 are filled with the buffer portions 5, and corresponds to a state where a spatial region is not present in slits 2. The phrase "the spatial region is not present" means that fine air bubbles or the like may be present but a large space (the spatial region) is not present, and the large space means a space whose maximum length in a cross section perpendicular to a thickness direction of the slits exceeds 5 mm. The "maximum length" means a length along a direction that the space becomes longest in this cross section. For example, the maximum length is a length of a diagonal in case of a rectangular, and it is a length of a major axis in case of an ellipse. In other words, according to the honeycomb structure 100 of this embodiment, the buffer portion 5 fills the whole slits 2 to prevent a space whose maximum length in a cross section perpendicular to the thickness direction of the slits 2 exceeds 5 mm from being present in the space of slits 2. In this case, the length (depth) of the buffer portions 5 in the central axial direction of the honeycomb structure 100 is the same as the depth of the slits. The material for the buffer portions 5 is preferably slurry prepared by kneading the mixture of inorganic fibers, colloidal silica, clay, SiC particles, an organic binder, a resin balloon, a dispersant, and water.

In the honeycomb structure 100 of the present embodiment, the outer peripheral coat may be formed in the outer periphery thereof. Though there is no particular limitation on the material of the outer peripheral coat, there may be used a mixture of inorganic fibers, colloidal silica, clay, SiC particles, an organic binder, a resin balloon, a dispersant, and water.

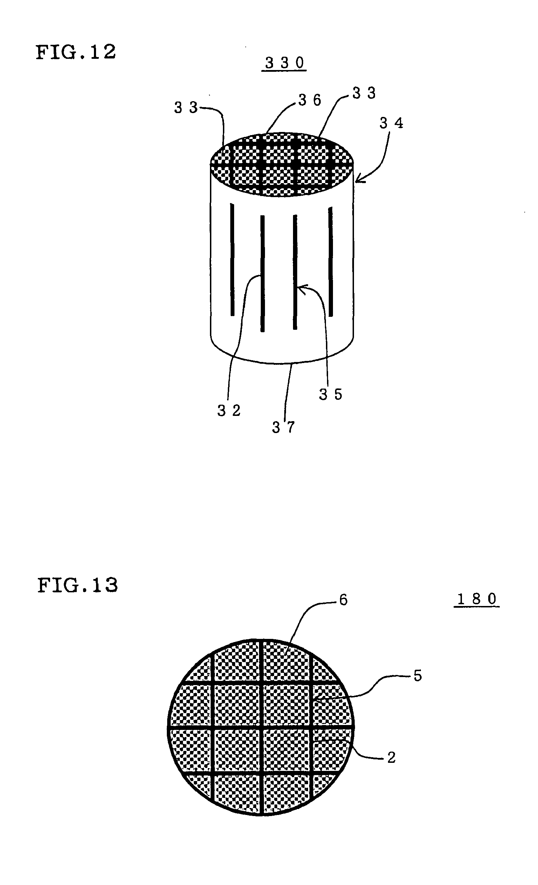

In still another embodiment of a honeycomb structure of the present invention, as shown in Fig. 12, the honeycomb structured portion 34 is a honeycomb structured portion where a plurality of partial segments 33 are separated and formed by a plurality of slits 32 reaching neither the one end face 36 nor the other end face 37 in the central axial direction and where buffer portions 35 are disposed in the slits 32 in the aforementioned one embodiment of a honeycomb structure of the present invention. The slits 32 reaches the outermost peripheral portion in the direction perpendicular to the central axis, and the honeycomb structured portion 34 has a structure where opening portions of the slits are formed in the outer peripheral face. The honeycomb structure 330 of the present embodiment is preferably under the same conditions as the case of the one embodiment (honeycomb structure 100) of a honeycomb structure of the present invention except that the positions where slits are formed are different. Fig. 12 is a perspective view schematically shown still another embodiment of a honeycomb structure of the present invention.

In a honeycomb structure 330 of the present embodiment, the length in the central axial direction of the slits 32 in the honeycomb structured portion 34 is preferably 70 to 98%. When it is below 70%, a damage may easily be caused due to a thermal shock upon use. When it is above 98%, pressure loss may easily increase. The distance from the one end face 36 to the slits 32 is preferably 1 to 15% of the length in the central axial direction of the honeycomb structured portion. When it is below 1%, the effect in inhibiting the pressure loss from increasing may be reduced. When it is above 15%, the thermal shock resistance may deteriorate.

### (2) Method for manufacturing a honeycomb structure:

A method for manufacturing a honeycomb structure of the present invention is a method where a forming raw material is extrusion-formed to form a honeycomb formed article having partition walls separating and forming a plurality of cells functioning as fluid passages and extending from one end face to the other end face, a plurality of slits extending in the cell extension direction and not reaching at least one of the end faces are formed so as to separate and form a plurality of partial segments in the honeycomb formed article to obtain a honeycomb structure with slits, and buffer portions disposed so as to infill the slits are formed by filling a filler into the slits in the honeycomb structure with slits to obtain a honeycomb structure. A honeycomb structure manufactured by a method for manufacturing a honeycomb structure of the present invention is preferably a fired one. Therefore, in a method for manufacturing a honeycomb structure of the present invention, it is preferable that, after a honeycomb formed article is formed, it is fired to manufacture a honeycomb fired article, and then slits are formed in the honeycomb fired article (one embodiment of a method for manufacturing a honeycomb structure of the present invention). Alternatively, it is also preferable that, after the slits are formed in a honeycomb formed article, the honeycomb formed article is fired to manufacture a honeycomb structure with slits (another embodiment of a method for manufacturing a honeycomb structure of the present invention).

### (2-1) One embodiment of a method for manufacturing a honeycomb structure:

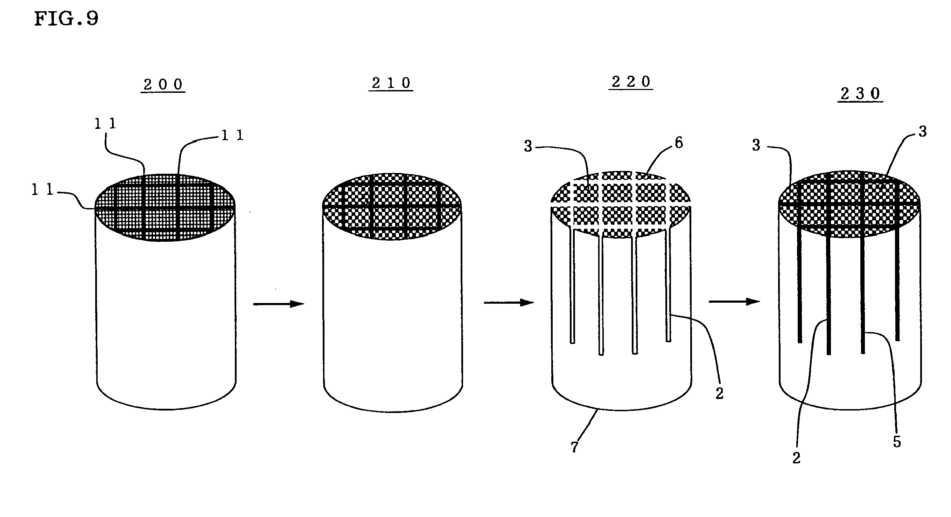

As shown in Fig. 9, one embodiment of a method for manufacturing a honeycomb structure of the present invention is a method where a forming raw material is extrusion-formed to form a honeycomb formed article 200 having partition walls separating and forming a plurality of cells functioning as fluid passages and extending from one end face to the other end face, the honeycomb formed article 200 is fired to form a honeycomb fired article 210, a plurality of slits 2 extending in the cell extension direction from one end face 6 and not reaching the other end face 7 are formed in the honeycomb fired article so as to separate and form a plurality of partial segments 3 to obtain a honeycomb structure 220 with slits, a filler is filled into the slits 2 in the honeycomb structure 220 with slits to form buffer portions 5, and outer peripheral coat is applied to obtain a honeycomb structure 230. In addition, as shown in Fig. 9, it is preferable that, after a honeycomb formed article 200 is manufactured, the cell opening portions on both the end faces are alternately plugged to form a plugged honeycomb formed article, and the plugged honeycomb formed article is fired to form a honeycomb fired article 210. Incidentally, it is also possible that, after the honeycomb formed article 200 is fired, plugging is performed, and then the plugged honeycomb formed article is fired again to fire the plugging portions. In the case of manufacturing a honeycomb structure having a large cylindrical shape or the like with a material having a high thermal expansion coefficient such as silicon carbide, it has generally been necessary to manufacture a honeycomb structure having a cylindrical shape or the like by subjecting the outer periphery to coarse processing and grinding after rectangular parallelepiped segments are manufactured and bonded together to manufacture a large rectangular parallelepiped bonded article in order to inhibit damages due to a thermal shock at high temperature. Therefore, an additional step such as an outer periphery coarse processing step has been required, and a raw material yield has not been high because the outer periphery was subjected to coarse processing. In contrast, in the method for manufacturing a honeycomb structure of the present embodiment, since a cylindrical honeycomb formed article having a desired size is manufactured, the method include neither a step of bonding rectangular parallelepiped segments nor a step of subjecting the outer peripheral portion to coarse processing. Therefore, the material has high production efficiency and high raw material yield because the outer peripheral portion is not subjected to coarse processing. Fig. 9 is a perspective view schematically showing a process of forming a honeycomb structure in an embodiment of a method for manufacturing a honeycomb structure of the present invention. Each step will hereinbelow be described.

### (2-1-1) Manufacture of honeycomb fired article:

In the first place, to a ceramic raw material were added a binder, a surfactant, and water to prepare a forming raw material. A pore former may be added to the forming raw material. As the ceramic raw material, it is preferable to employ at least one kind selected from the group consisting of silicon carbide, silicon-silicon carbide based composite material, cordierite, mullite, alumina, spinel, silicon carbide-cordierite based composite material, lithium aluminum silicate, aluminum titanate, and iron-chrome-aluminum based alloy. Of these, silicon carbide or silicon-silicon carbide based composite material is preferable. When silicon-silicon carbide based composite material is employed, a mixture of a silicon carbide powder and a metal silicon powder is used as the ceramic raw material.

Examples of the binder include methyl cellulose, hydroxypropoxyl cellulose, hydroxyethyl cellulose, carboxymethyl cellulose, and polyvinyl alcohol. Of these, it is preferable to use methyl cellulose and hydroxypropoxyl cellulose together. The binder is preferably contained at 1 to 20 mass% with respect to the whole forming raw material.

Water is preferably contained at 18 to 45 mass% with respect to the whole forming raw material.

Examples of the surfactant include ethylene glycol, dextrin, fatty acid soap, and poly alcohol. They may be used alone or in combination of two or more. The surfactant is preferably contained at 0 to 5 mass% with respect to the whole forming raw material.

There is no particular limitation on the pore former as long as it forms pores after firing. Examples of the pore former include starch, a resin balloon, water-absorbent resin, and silica gel. The pore former is preferably contained at 0 to 15 mass% with respect to the whole forming raw material.

Next, the forming raw material is kneaded to form kneaded clay. There is no particular limitation on a method for forming kneaded clay by kneading a forming raw material. For example, a method using a kneader, a vacuum kneader, or the like may be employed.

Next, the kneaded clay is formed to form a honeycomb formed article. There is no particular limitation of the method for forming a honeycomb formed article by forming the kneaded clay, and a conventionally known forming method such as extrusion-forming and injection-forming may be employed. A suitable example of the method is a method where a honeycomb formed article is formed by extrusion-forming the kneaded clay by the use of a die having a desired cell shape, partition wall thickness, and cell density. As the material for the die, superhard alloy which hardly wears is suitable. As the shape of the honeycomb formed article 200, the partition walls may have a uniform thickness, or a portion where a slit is formed in a later step may be thickly formed. For example, in the honeycomb formed article 200 shown in Fig. 9, the thick portion 11 which is thicker than a partition wall is disposed in a portion where a slit is formed. In this case, it is preferable to form a slit by grinding the thick portion 11. The thickness of the thick portion is preferably similar to the thickness of the thick portion in the aforementioned one embodiment of a honeycomb structure of the present invention.

It is preferable that the formed article is subjected to drying before firing. There is no particular limitation on the drying method, and examples of the drying method include an electromagnetic wave heating method such as microwave heating-drying and high-frequency wave dielectric heating-drying and an external heating method such as hot air drying and superheated steam drying. Of these, it is preferable to dry a certain amount of water by an electromagnetic wave heating method and then dry the remaining water by an electromagnetic wave heating method in that drying can be performed on the whole formed article quickly and uniformly without causing a crack. As the drying conditions, it is preferable that, after 30 to 90 mass% of water with respect to the water amount before drying is removed by an electromagnetic wave heating method, water is reduced to 3 mass% or less by an external heating method. As the drying conditions, dielectric heating-drying is preferable in the case of an electromagnetic wave heating method, and hot air drying is preferable in the case of an external heating method.

Next, in the case that the length of the honeycomb formed article in the central axial direction is not a desired length, it is preferable to cut both the end faces to have a desired length. There is no particular limitation on the cutting method, an example is a disc saw cutter.

Then, it is preferable to plug the opening portions of the predetermined cells on one end face of the honeycomb formed article and the opening portions of the other cells on the other end face. Though there is no particular limitation on the plugging method, the following method may be employed as an example. After a sheet is applied on one end face of the honeycomb formed article, holes are made in positions corresponding to cells to be plugged in the sheet. Then, the end face having the sheet applied thereon of the honeycomb formed article is immersed in plugging slurry of slurried constituent material for plugging, thereby filling the plugging slurry into the opening end portions of the cells to be plugged through the holes in the sheet. The other end face of the honeycomb formed article is subjected to plugging (plugging slurry is filled) in the same manner as in the aforementioned one end face with regard to the cells which are not plugged in the aforementioned one end face. As the constituent material for plugging, the same material as the material for the honeycomb formed article is preferably used.

Next, the honeycomb formed article 200 is fired to manufacture a honeycomb fired article 210. It is preferable to calcine the honeycomb formed article 200 before firing in order to remove a binder and the like. The calcination is preferably performed in an ambient atmosphere at 400 to 500°C for 0.5 to 20 hours. There is no particular limitation on the calcination and firing methods, and firing can be performed by the use of an electric furnace, a gas furnace, or the like. As the heating conditions, heating is preferably performed at 1300 to 1500°C for one to 20 hours in an inert atmosphere such as nitrogen or argon.

### (2-1-2) Manufacture of a honeycomb structure with slits:

A honeycomb structure 220 with slits as shown in Fig. 9 can be obtained by forming a plurality of slits 2 extending along the direction where the cells extend from one end face 6 and not reaching the other end face 7 in such a manner that the slits separate and form a plurality of partial segment 3 in the honeycomb fired article 210. Here, "a plurality of slits 2 extending along the direction where the cells extend from one end face 6 and not reaching the other end face 7" shows the state that slits 2 are formed, that is, disposition of the slits 2 in the honeycomb fired article 210 and means that the slits 2 extending in the central axial direction are formed so as to reach one end face 6 (one end face 1 is cut). Therefore, it does not mean that cutting is performed in the direction toward the other end face 7 with abutting a cut-forming apparatus against the one end face 6 of the article as an operation for forming slits 2. Therefore, in the operation for forming slits 2, cutting may be started on the one end face 6 side, on the side face, or from the other direction. In addition, "slits reach an end face" means the state that the end face is cut by the slits and state that the slits are visible when the end face is observed (the opening portions of the slits are formed on the end face). In the method for manufacturing a honeycomb structure of the present embodiment, the slits 2 are formed in such a manner that the slits reach (cut) the one end face 6 and do not reach the other end face 7. However, the slits 2 may be formed in such a manner that the slits 2 do not reach at least an end face on one side.

In the case of forming slits 2 (open structured slits) which are straight and have a structure that both the end portions of the slits 2 reach the outermost peripheral portion as the slits in the honeycomb structure 220 with slits shown in Fig. 9, it is preferable to use a disc-shaped multi-grinding stone, a multiblade saw, a multiwire saw, or the like. The disc-shaped multi-grinding stone is used in such a manner that a plurality of disc-shaped grinding stones are alligned in parallel with one another at the side of the outer peripheral portion of the honeycomb fired article 210 and moved in parallel with the one end face 6 of the honeycomb fired article 210 with being rotated individually to subject the honeycomb fired article 210 to slit-processing. For example, "High Speed Surface Grinding Machine" produced by ELB GMBH can be used. The multiblade saw is used in such a manner that a plurality of stick-shaped (or plate-shaped) grinding stones are aligned in parallel with one another on the one end face 6 to form slits in the honeycomb fired article by moving in the direction toward the other end face 7 from the one end face 6 with being individually reciprocated in parallel with the one end face 6. For example, "Blade Saw" produced by Nomura Machine Tool Works Ltd. can be used. The multiwire saw is used in such a manner that a plurality of wire-shaped grinding stones are aligned in parallel with one another on the one end face 6 and individually reciprocated or continuously moved in one direction in parallel with the one end face 6 to form slits in the honeycomb fired article from the one end face 6 toward the other end face 7. For example, "Multiwire Saw" produced by Takatori Corp. can be used. The inner surface may have partition walls in some degree or no partition wall.

In addition, when slits 2 (closed structured slits) having a structure that at least one of the end portions do not reach the outermost peripheral portion of the honeycomb structured portion 4 in the one end face 6 as the slits formed in the honeycomb structured portion 4 of the honeycomb structure 120 shown in Fig. 3, there is preferably used a supersonic vibration blade method, a low-frequency vibration blade method, or the like. In a slit processing by vibration blade method, the tip in the longitudinal direction of a stick-shaped or a plate-shaped blade or a cylindrical blade having the same cross-sectional shape as that of the cross section perpendicular to the central axial direction of the slits 2 is abutted against the one end face 6 of the honeycomb fired article, and the blades are subjected to supersonic vibrations to form slits in a honeycomb fired article. Since slits are formed by the use of tips of the stick-shaped or plate-shaped blades, slits can be formed in any position of the one end face 6 of a honeycomb fired article. As a processing apparatus for a vibration blade method, for example, "Ultrasonic Processing Equipment" produced by JAPAN ELECTRONICS INDUSTRY LTD. can be used. Slit-processing by a low-frequency vibration blade method can be performed similarly to the case of the supersonic vibration blade method. As a difference between the supersonic vibration blade method and the low-frequency vibration blade method, blades are vibrated by supersonic waves in the supersonic vibration blade method, while blades are vibrated by an eccentric motor, a cam mechanism, an eccentric spindle mechanism, or the like.

In addition, also in the case of forming a honeycomb structure 170 where the slits 2 are formed without cutting the outermost peripheral portion 12 of the honeycomb structured portion 4 as shown in Fig. 8, there is preferably used a supersonic vibration blade method, a low-frequency vibration blade method, or the like similarly to the aforementioned case of forming closed structured slits in the honeycomb structure 120. All the slits 2 in the honeycomb structure 170 are closed structured slits.

In the method for manufacturing a honeycomb structure of the present embodiment, as shown in Fig. 9, slits 2 are formed in the thick portions 11 of the honeycomb formed article 200 (plugged honeycomb formed article 210). Thus, it is preferable to form thick portions in a honeycomb formed article and then form slits in the thick portions. However, it is also preferable to form slits to cut partition walls without forming the thick portions. As embodiments of slit formation by cutting partition walls, embodiments similar to the embodiments of slit formation shown in Figs. 10A to 10C, 11A and 11B in the aforementioned honeycomb structure of the present invention can be employed.

### (2-1-3) Method for manufacturing a honeycomb structure:

A honeycomb structure 230 can be obtained by filling(satisfying) a filler into the whole slits 2 of the honeycomb structure 220 with slits to form buffer portions 5 disposed so as to infill the slits 2. As a method for filling a filler in slits 2, there may be employed a method where a filler slurried by dispersing a filler in a dispersion medium such as water is filled in slits 2. In the case of filling the slurry into the slits, it is preferable that the honeycomb structure 220 with slits is put in a closed container and that a tape or the like is wrapped around the outer periphery lest the slurry should leak from the outer periphery. When the honeycomb structure 220 with slits is large, slurry can be filled into the slits without applying high pressure by filling slurry from a plurality of positions. As the material for the tape wrapped around the outer periphery of the honeycomb structure 220 with slits, there may be employed an impermeable material such as polyester. In this case, when slurry is tried to fill in the slits in the state that the honeycomb structure 220 with slits is immobilized, if the honeycomb structure is porous, the slurry sometimes do not spread uniformly in the slits 2 because the dispersion medium is absorbed by the partition walls, and a state where the buffer portion fills the whole slits is hard to be obtained. Therefore, in such a case, it is preferable that the slurry is filled under pressure with vibrating the honeycomb structure 220 with slits by a vibration apparatus. As an example of the vibration apparatus, "Small type vibration tester" produced by Asahi Seisakusho Co., Ltd., can be used. In addition, in order to fill the slurry uniformly into the slit more easily (to facilitate filling the whole slits with the buffer portion), it is preferable to subject the inner walls of the slits (outer peripheral walls of the partial segments) to a water-repellent treatment. The water-repellent treatment is preferably performed by, for example, spraying slurry containing SiC particles. After the slurry is filled into the slit, the slurry is preferably dried at 100°C or more. As an example of the method for forming the buffer portions 5, there may be employed a method where a filler is formed into a tape shape, a plurality of tape-shaped fillers are filled into the slits and then subjected to a heating treatment to obtain the buffer portions 5. There is no particular limitation on the method for forming the filler into a tape shape, and there may be employed a method where a filler, a binder, a surfactant, water, and the like is mixed to prepare a forming raw material, which is then formed into a tape shape by a method for forming a tape. In addition, as a method for forming the buffer portions 5, there may be employed a method where a powder-shaped filler is filled into the slits, followed by sealing the opening portions (portions where the filler is exposed on the surface of the honeycomb structure with slits) of the slits with cement, bond, or the like lest the filler should come out of the slits. The powder-shaped filler can be filled into the slits by tapping.

As the filler, there may be employed, for example, slurry obtained by kneading a mixture of inorganic fibers, colloidal silica, clay, SiCparticles, an organic binder, a resin balloon, a dispersant, and water. When the tape-shaped filler is filled into the slits, it is preferable to use a material which foams by a thermal treatment and to heat the honeycomb structure with slits after the filler is filled into the slits. An example of the material which foams by a thermal treatment is an urethane resin.

### (2-1-4) Outer peripheral coat treatment:

It is preferable to perform an outer peripheral coat treatment after the honeycomb structure is formed. As an example of the outer peripheral coat treatment, there may be employed a method where an outer peripheral coat material is applied on the outer periphery of the honeycomb structure and dried. As the outer peripheral coat material, there may be used a material obtained by mixing an inorganic fiber, colloidal silica, clay, SiC particles, an organic binder, a resin balloon, a dispersant, water, and the like. There is no particular limitation on the method for applying the outer peripheral coat material, and an example of the method is a method where the material is coated with a rubber spatula with rotating the honeycomb structure on a wheel.

As shown in Fig.8, in the case of forming a honeycomb structure 170 where the slits 2 are formed in such a manner that the outermost peripheral portion 12 of the honeycomb structured portion 4 is left without being cut by the slits 2, since the buffer portions are not exposed in the outermost peripheral portion, the outer peripheral coat treatment is not required, and production efficiency can further be improved. When a smoother outer peripheral face is required with further reducing unevenness of the outer peripheral face, it is further preferable to perform outer periphery grinding and/or outer periphery coat treatment.

### (2-2): Another embodiment of a method for manufacturing a honeycomb structure:

In another embodiment of a method for manufacturing a honeycomb structure of the present invention, a forming raw material is subjected to extrusion-forming to form a honeycomb formed article having partition walls separating and forming a plurality of cells functioning as fluid passages and extending from one end face to the other end face, a plurality of slits extending in the cell extension direction and not reaching the other end face are formed so as to separate and form a plurality of partial segments in the honeycomb formed article, the honeycomb formed article with slits is fired to form a honeycomb structure with slits, buffer portions disposed so as to infill the slits are formed by filling a filler into the slits in the honeycomb structure with slits, and the outer periphery of the honeycomb structure is coated to obtain a honeycomb structure. That is, firing is performed after forming the slits in the method as another embodiment unlike the aforementioned method for manufacturing a honeycomb structure of the present invention, where slits are formed after firing the honeycomb formed article. Thus, by forming slits before firing the honeycomb formed article, it is possible to reuse a powder generated by forming the slits. Incidentally, in the case of forming the slits after firing, since the powder generated by forming the slits has a different composition from that of the initial forming raw material by firing, the powder cannot be reused. In addition, by firing after forming the slits, the stress generated in the honeycomb formed article upon firing is relaxed by the slits, and a crack by firing can be inhibited.

In the method for manufacturing a honeycomb structure of the present invention as another embodiment, only the order of firing and slit formation is reversed, and the conditions of the other steps are the same as the aforementioned method for manufacturing a honeycomb structure of the present invention as one embodiment.

### (2-3) Still another embodiment of a method for manufacturing a honeycomb structure:

In still another embodiment of a method for manufacturing a honeycomb structure of the present invention, a honeycomb formed article 200 (or, honeycomb fired article 210) (see Fig. 9) is formed in the same manner as in the aforementioned one embodiment of a method for manufacturing a honeycomb structure of the present invention, a plurality of slits extending in the cell extension direction (central axial direction) and not reaching neither one end face nor the other end face are formed in a honeycomb structured portion of the honeycomb formed article to obtain a honeycomb structure with slits, buffer portions 35 disposed so as to infill the slits 32 by filling a filler into the slits of the honeycomb structure with slits as shown in Fig. 12 are formed to obtain a honeycomb structure 330. In the method for manufacturing a honeycomb structure of the present embodiment, since slits are formed in neither the vicinity of the one end face 36 nor the vicinity of the other end face 37, deformation of the honeycomb structure with slits after slits are formed can be inhibited, manufacturing from slit formation to buffer portion formation can be performed stably, and production efficiency can be improved. The length and disposition in the central axial direction of the slits 32 are preferably similar to the case of the honeycomb structure 330 shown in Fig. 12.

In the method for manufacturing a honeycomb structure of the present embodiment, it is necessary to form slits from the side face of the honeycomb formed article. As the method for forming the slits, there may preferably be employed a supersonic vibration blade method, a low-frequency vibration blade method, or the like as in the aforementioned case of forming closed structured slits in the honeycomb structured portion 4 of the honeycomb structure 120 shown in Fig. 3 described above. In the method for manufacturing a honeycomb structure of the present embodiment, the conditions are the same as in the one embodiment (see Fig. 9) of a method for manufacturing a honeycomb structure of the present invention except for the positions where slits are formed.

Hereinbelow, the present invention will be described more specifically by Examples. However, the present invention is by no means limited to these Examples.

### (Example 1)

As a ceramic raw material, a SiC powder and a metal Si powder are mixed at a mass ratio of 80:20, and to the mixture were added methyl cellulose and hydroxypropoxymethyl cellulose as forming auxiliaries, starch and water-absorbing resin as pore formers, a surfactant, and water, followed by kneading by a vacuum kneader to manufacture kneaded clay.

The cylindrical kneaded clay obtained above was formed into a honeycomb shape by the use of an extruder. After high-frequency dielectric heating-drying, drying was further performed at 120°C for two hours, followed by cutting both the end faces at a predetermined amount to obtain a cylindrical honeycomb formed article having a partition wall thickness of 310 µm, a cell density of about 46.5 cells/cm² (300 cells/inch²), a bottom face radius of 145 mm, and a length of 155 mm. Incidentally, the partition wall thickness of the honeycomb formed article was uniform as a whole, and a thick portion was not formed. In addition, the direction where the cells extend was the central axial direction of the honeycomb structure.

The honeycomb formed article was subjected to plugging at an end portion of each cell in such a manner that adjacent cells are alternately plugged to form a checkerwise pattern in each of the end faces. As the filler for plugging, the same material as for the honeycomb formed article was used.

After the plugging, the plugged honeycomb formed article was dried at 120°C for five hours by the use of a hot air drier and then degreased at about 450°C for five hours using an atmosphere furnace with a deodorizing apparatus in an ambient atmosphere, followed by firing at about 1450°C for five hours in an Ar inert atmosphere to obtain a plugged porous honeycomb fired article where SiC crystal particles are bonded by Si. The honeycomb fired article had an average pore diameter of 13 µm and a porosity of 41%. The average pore diameter was measured by a mercury porosimeter, and the porosity was measured by the Archimedes method.

The honeycomb fired article obtained above was subjected to slit-processing to obtain a honeycomb structure with slits. The slits were formed by the use of a disc-shaped multi-grinding stone ("High Speed Surface Grinding Machine" produced by ELB GMBH). As the honeycomb structure 180 shown in Fig. 13, in one end face of the honeycomb fired body, three parallel slits and other three parallel slits perpendicular to the three slits are formed to form 16 partial segments (slit pattern: 3 × 3). Each interval between two adjacent parallel slits was 36 mm. The length (slit depth) of the slits in the central axial direction of the honeycomb fired article (structured portion) was 25% of the central axial direction of a honeycomb fired article. All the slits had the same slit depth. The slits had a width of 1 mm. Fig. 13 is a plan view from one end face side, schematically showing a honeycomb structure manufactured in Example 1.

The buffer portions 5 were formed by filling a slurried filler into the whole slits of the honeycomb structure with slits to obtain a honeycomb structure. Since the filler was filled in the whole slits, the filler had the same depth as slit depth. As the filler, a mixture of aluminosilicate inorganic fibers and SiC particles was used. As the slurry containing the filler, there was used slurry containing 30 parts by mass of water, 30 parts by mass of aluminosilicate, and 30 parts by mass of SiC particles with respect to 100 parts by mass of the filler. When the slurry was filled in the slits, the slurry was filled in the slits under pressure after putting the honeycomb structure with slits in a closed container and wrapping a polyester-based tape (Scotch (trade name) Tape) lest the slurry should leak from the outer periphery of the honeycomb structure with slits. The honeycomb structure thus obtained was measured for regeneration limit (g/liter) and pressure loss (%) by the following methods. The results are shown in Table 1.

### (Regeneration limit)

The limit where a crack is generated is confirmed by performing regeneration (combustion of soot) using a honeycomb structure as a DPF and gradually increasing a soot accumulation amount. In the first place, a ceramic non-expansion mat as a holding member is wrapped around the outer periphery of the honeycomb structure obtained above, and the structure was squeezed into a canning can of SUS409 to obtain a canning structure. Then, combustion gas containing soot generated by combusting diesel fuel light oil is made to flow in the honeycomb structure from one end face (end face on the side where no slits are formed) and flow out from the other end face to allow soot to accumulate inside the honeycomb structure. After temporarily cooling down to room temperature, combustion gas containing a certain proportion of oxygen at 680°C is made to flow in the honeycomb structure from the aforementioned one end face, and the flow rate of the combustion gas is reduced when the pressure loss of the honeycomb structure is lowered to quickly combusting the soot. Then, presence of crack generation in the plugged honeycomb structure is confirmed. The test is started when the soot accumulation amount is 4 (g/liter) and repeated with increasing the amount by 0.5 (g/liter) until crack generation is confirmed. The results of measuring the regeneration limit shown in Table 1 are shown based on the measurement result of the honeycomb structure of Comparative Example 1 (the case that slit depth is the same as the length of the honeycomb structure in the central axial direction (the state that the partial segments are completely separated)). That is, the figures each shows a value obtained by deducting the measurement result of the regeneration limit value (g/liter) of the honeycomb structure of Comparative Example 1 from the measurement result (average value of the five-time measurement of each honeycomb structure) of the regeneration limit value (soot amount when an initial crack is generated) of each honeycomb structure.

### (Pressure loss)

Pressure loss of each honeycomb structure was measured by the use of an evaluation criterion wind tunnel (pressure loss measurement apparatus for a filter described in JP-A-2005-172652). In the measurement, the fluid had a flow rate of 10 Nm³/min, and the temperature was 25°C. The measurement results of the pressure loss shown in Table 1 show values based on the measurement results of the honeycomb structure of Comparative Example 1 (state that the partial segments are completely separated)). That is, figures each shows a proportion of a value obtained by deducting the measurement result of the pressure loss of the honeycomb structure of Comparative Example from the measurement results (average value of the five-time measurement of each honeycomb structure) of the pressure loss of each honeycomb structure with respect to the measurement result of the pressure loss of the honeycomb structure of Comparative Example 1.

**[Table 1]**

| | pattern | Slit depth (%) | Regeneration limit (g/liter) | Pressure loss (%) | Raw material yield (%) |
|---|---|---|---|---|---|
| Example 1 | 3 × 3 | 25 | 0 | -5.8 | 100 |
| Example 2 | 3 × 3 | 50 | 0 | -5.6 | 100 |
| Example 3 | 3 × 3 | 75 | 0 | -5.5 | 100 |
| Example 4 | 3 × 3 | 99 | 0 | -5.4 | 100 |
| Comp. Ex. 1 | 3 × 3 | 100 | 0 | 0 | 100 |
| Example 5 | Central portion was subdivided | 25 | +1 | -0.4 | 100 |
| Example 6 | Central portion was subdivided | 50 | +1 | -0.2 | 100 |
| Example 7 | Central portion was subdivided | 75 | +1 | -0.1 | 100 |
| Example 8 | Central portion was subdivided | 99 | +1 | 0 | 100 |
| Comp. Ex. 2 | Central portion was subdivided | 100 | +1 | 5.4 | 100 |
| Comp. Ex. 3 | - | - | -2 | -10.3 | 100 |
| Comp. Ex. 4 | 3 × 3 | - | 0 | 0 | 74 |

### (Example 2)

The honeycomb structure was manufactured in the same manner as in Example 1 except that the slit depth was 50% of the length in the central axial direction of the honeycomb fired article. The honeycomb structure was measured for the regeneration limit (g/liter) and pressure loss (%) in the same manner as in Example 1. The results are shown in Table 1.

### (Example 3)

The honeycomb structure was manufactured in the same manner as in Example 1 except that the slit depth was 75% the length in the central axial direction of the honeycomb fired article. The honeycomb structure was measured for the regeneration limit (g/liter) and pressure loss (%) in the same manner as in Example 1. The results are shown in Table 1.

### (Example 4)

The honeycomb structure was manufactured in the same manner as in Example 1 except that the slit depth was 99% the length in the central axial direction of the honeycomb fired article. The honeycomb structure was measured for the regeneration limit (g/liter) and pressure loss (%) in the same manner as in Example 1. The results are shown in Table 1.

### (Example 5)

The honeycomb structure was manufactured in the same manner as in Example 1 except that the slit forming pattern was as in the honeycomb structure shown in Fig. 3. In the six slits reaching the outer peripheral portion (three slits in parallel with one another and other three slits perpendicular to the three slits on one end face), slits were formed by the use of a disc-shaped multi-grinding stone ("High Speed Surface Grinding Machine" produced by ELB GMBH). In each of the four square partial segments separated and formed by the six slits and excluding the outer periphery on one end face, slits formed so as to further divide each of the segments equally into four (slit patterns: the central portion was subdivided) were formed by the use of a supersonic blade saw ("Ultrasonic Processing Equipment" produced by JAPAN ELECTRONICS INDUSTRY LTD). The slits were formed in such a manner that the minimum area in one end face of the partial segments subdivided is smaller than the maximum area in the one end face of the partial segments constituting the outer periphery of the honeycomb structural portion. Incidentally, the slit depth was 25% of the length of the honeycomb fired article in the central axial direction. The honeycomb structure was measured for the regeneration limit (g/liter) and pressure loss (%) in the same manner as in Example 1. The results are shown in Table 1.

### (Example 6)

The honeycomb structure was manufactured in the same manner as in Example 5 except that the slit depth was 50% of the length in the central axial direction of the honeycomb fired article. The honeycomb structure was measured for the regeneration limit (g/liter) and pressure loss (%) in the same manner as in Example 1. The results are shown in Table 1.

### (Example 7)

The honeycomb structure was manufactured in the same manner as in Example 5 except that the slit depth was 75% of the length in the central axial direction of the honeycomb fired article. The honeycomb structure was measured for the regeneration limit (g/liter) and pressure loss (%) in the same manner as in Example 1. The results are shown in Table 1.

### (Example 8)

The honeycomb structure was manufactured in the same manner as in Example 5 except that the slit depth was 99% of the length in the central axial direction of the honeycomb fired article. The honeycomb structure was measured for the regeneration limit (g/liter) and pressure loss (%) in the same manner as in Example 1. The results are shown in Table 1.

### (Comparative Example 1)

The honeycomb structure was manufactured in the same manner as in Example 1 except that the slit depth was 100% of the length in the central axial direction of the honeycomb fired article. The honeycomb structure was measured for the regeneration limit (g/liter) and pressure loss (%) in the same manner as in Example 1. The results are shown in Table 1.

### (Comparative Example 2)

The honeycomb structure was manufactured in the same manner as in Example 5 except that the slit depth was 100% of the length in the central axial direction of the honeycomb fired article. The honeycomb structure was measured for the regeneration limit (g/liter) and pressure loss (%) in the same manner as in Example 1. The results are shown in Table 1.

### (Comparative Example 3)

The honeycomb structure was manufactured in the same manner as in Example 1 except that no slit was formed and that no buffer portion 5 was formed. The honeycomb structure was measured for the regeneration limit (g/liter) and pressure loss (%) in the same manner as in Example 1. The results are shown in Table 1.

### (Comparative Example 4)

In the same manner as in Example 1, there were manufactured 16 rectangular parallelepiped honeycomb segments (partition wall thickness of 310 µm and cell density of 46.5 cells/cm² (300 cells/ inch²)) having a side of 36 mm and a length of 155 mm. The honeycomb segments were bonded together by the use of a bonding machine to manufacture one large rectangular parallelepiped bonded article (side of 144 mm and length of 155 mm). The outer periphery of the bonded article was subjected to coarse processing and grinding to obtain a cylindrical honeycomb structure having a bottom face radius of 145 mm and a length of 155 mm. The pattern on the end faces of the honeycomb structure was the same as the pattern of the end faces of the honeycomb structure shown in Fig. 13. The honeycomb structure was measured for the regeneration limit (g/liter) and pressure loss (%) in the same manner as in Example 1. Also, the raw material yield was obtained. The results are shown in Table 1.

From Table 1, it can be understood that, when the slit depth is 25% or more, the honeycomb structures showed good regeneration limits (same as or larger than Comparative Example 1). In addition, from the evaluation results of the honeycomb structures in Examples 1 to 4, it can be understood that the honeycomb structures each having a slit depth of 25 to 99% have lower pressure loss than that of a honeycomb structure having a slit depth of 100%. Further, from the evaluation results of Examples 5 to 8, it can be understood that, by making the minimum area of the partial segments subdivided smaller than the maximum area of the partial segments constituting the outer periphery of the honeycomb structured portion on one end face by subdividing the partial segments excluding the outer periphery, the regeneration limit values are higher than that of the honeycomb structure of Comparative Example 1. Also, it can be understood that, since pressure loss tends to increase as a whole when the partial segments excluding the outer periphery are further separated, it is preferable to control the segment depth to 25 to 75% lest the pressure loss should become too high.

An isostatic breakdown strength (which will be referred to as an iso-strength) of the honeycomb structure according to Example 3 was measured based on the following method. Table 2 shows results.

**[Table 2]**

| | Space in buffer portion | | Iso-strength (MPa) |
|---|---|---|---|
| | Position | Length (mm) | |
| Example 3 | - | 0 | 7.5 |
| Comparative Example 5 | From end surface | 5 | 6.1 |
| Comparative Example 6 | | 10 | 5.7 |
| Comparative Example 7 | | 20 | 4.5 |
| Comparative Example 8 | | 50 | 2.2 |
| Comparative Example 9 | From central portion | 5 | 6.3 |
| Comparative Example 10 | | 10 | 6.1 |
| Comparative Example 11 | | 20 | 5.2 |
| Comparative Example 12 | | 50 | 3.8 |

### (Iso-strength)

An urethane rubber sheet having a thickness of 0.5 mm (a specification: urethane 90° natural) is wound on an outer periphery of a honeycomb structure, an aluminum circular plate having a thickness of 20 mm is arranged on each of both end surfaces to sandwich the circular urethane sheet therebetween, and a space between an outer periphery of each aluminum circulate plate and the urethane rubber sheet is plugged by winding a vinyl tape on the outer periphery of each aluminum circular plate, thereby obtaining a test sample. A radius of the aluminum circular plate and the urethane rubber sheet arranged on each end surface are set to be equal to a radius of each end surface of the honeycomb structure. The manufactured test sample is put input a pressure container, a pressure is increased at a speed of 0.3 to 3.0 MPa/minute, and a pressure is recorded until the pressure starts dropping. A maximum pressure is determined as an iso-strength (MPa). In this test, the honeycomb structure is destructed under a predetermined pressure when the sample is put into the pressure container and the pressure is increased, and the pressure is reduced when the honeycomb structure is destructed. Therefore, measuring the maximum pressure when the pressure is increased enables obtaining the iso-strength.

### (Comparative Example 5)

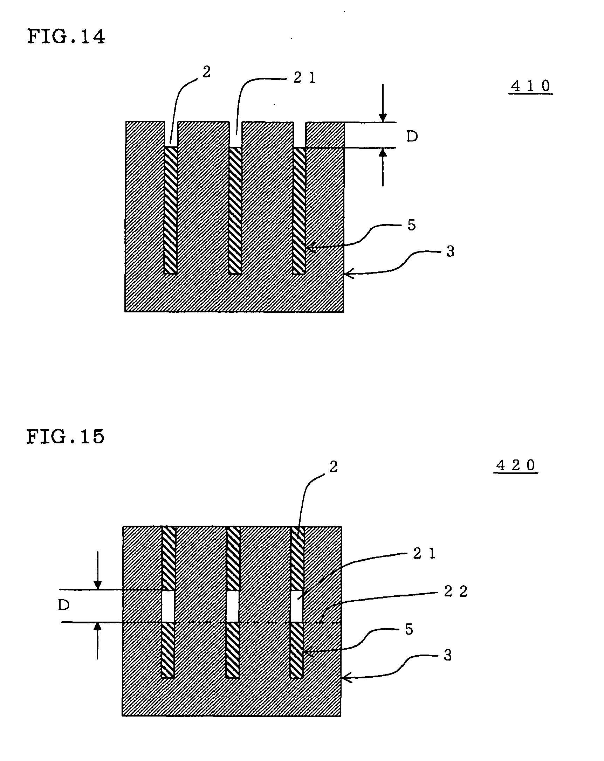

A honeycomb structure was manufactured in the same manner as Example 3 except that a paper sheet having a thickness of one mm was inserted into slits to reach a depth of five mm from one end surface when filling the slits of a honeycomb structure with slits with a filler to form a buffer portion 5, a heat treatment was performed at approximately 600°C to burn each paper sheet after forming the buffer portion 5, and a space was formed in each portion where the paper sheet was present. The obtained honeycomb structure has such a structure in which a space 21 is formed in slits 2 as shown in FIG. 14. FIG. 14 is a schematic view showing a cross section of a honeycomb structure 410 manufactured in Comparative Example 5 in parallel to a central axis. A depth D of the space 21 is five mm. An iso-strength was measured in the same manner as Example 3. Table 2 shows results.

### (Comparative Examples 6 to 8)

Each honeycomb structure was manufactured in the same manner as Comparative Example 5 except that a paper sheet was inserted from one end surface to reach a depth of 10 mm, 20 mm, or 50 mm when filling the slits of a honeycomb structure with slits with a filler to form a buffer portion 5 (Comparative Examples 6, 7, and 8). Iso-strengths were measured in the same manner as Example 3. Table 2 shows results.

### (Comparative Example 9)

A honeycomb structure was manufactured in the same manner as Comparative Example 5 except that a position at which a paper sheet is inserted was set to a range that is five mm from a central portion 22 in a central axis direction of the honeycomb structure toward one end surface as a end surface having slits formed therein. The obtained honeycomb structure has such a structure as shown in FIG. 15, and a depth D of a space 21 formed in slits 2 is five mm. FIG. 15 is a perspective view showing a cross section of a honeycomb structure 420 manufactured in Comparative Example 9 in parallel to a central axis. An iso-strength was measured in the same manner as Example 3. Table 2 shows results.

### (Comparative Examples 10 to 12)

Each honeycomb structure was manufactured in the same manner as Comparative Example 9 except that a position at which a paper sheet is inserted was set to a range that is 10 mm, 20 mm, or 50 mm from a central portion in a central axis direction of the honeycomb structure toward one end surface as a end surface having slits formed therein (Comparative Examples 10, 11, and 12). Iso-strengths ware measured in the same manner as Example 3. Table 2 shows results.

It can be understood from Table 2 that the honeycomb structure according to Example 3 has a higher iso-strength than those of the honeycomb structures according to Comparative Examples 5 to 12 since a space is not formed in each slit. The high iso-strength is advantageous in canning resistance.

A honeycomb structure of the present invention can suitably be used as a carrier for a catalyst apparatus used for environmental measures, collection of specific substance, or the like, or as a filter in various fields such as chemistry, electric power, and iron and steel. In addition, a method for manufacturing a honeycomb structure of the present invention can be used for effectively manufacturing such a honeycomb structure of the present invention.

## Claims

1. A honeycomb structure comprising:
a honeycomb structured portion having partition walls separating and forming a plurality of cells functioning as fluid passages and extending through from one end face to the other end face and having a plurality of partial segments separated and formed by a plurality of slits extending in a cell extension direction and not reaching at least one of the end faces, and
buffer portions formed by filling a filler in the whole slits.

2. The honeycomb structure according to claim 1, wherein the honeycomb structured portion has a plurality of partial segments separated and formed by the plurality of slits extending from the one end face in a cell extension direction and not reaching the other end face.

3. The honeycomb structure according to claim 1 or 2, wherein a length of the slits extending in the cell extension direction in the honeycomb structured portion is 25 to 99% of a length of the honeycomb structured portion in a central axial direction.

4. The honeycomb structure according to any one of claims 1 to 3, wherein the partial segment having the largest area in a cross section perpendicular to the cell extension direction of the honeycomb structured portion among the partial segments constituting an outer periphery of the honeycomb structured portion has an area larger than that of the partial segment having the smallest area among the other partial segments locating in the central portion of the honeycomb structured portion.

5. The honeycomb structure according to any one of claims 1 to 4, wherein the slits are formed by leaving without cutting an outermost peripheral portion of the honeycomb structured portion.

6. The honeycomb structure according to claim 1, wherein a plurality of partial segments are separated and formed by a plurality of slits extending in the central axial direction and reaching neither the one end face nor the other end face in the honeycomb structured portion.

7. The honeycomb structure according to any one of claims 1 to 6, having an expansion coefficient of 1×10⁻⁶/°C or more.

8. The honeycomb structure according to any one of claims 1 to 7, wherein opening portions of predetermined cells on one end face and opening portions of the other cells on the other end face are plugged.

9. A method for manufacturing a honeycomb structure, the method comprising the steps of:
extrusion-formingaformingraw materialtoobtain a honeycomb formed article having partition walls for separating and forming a plurality of cells functioning as fluid passages and extending from one end face to the other end face,
forming a plurality of slits extending in the cell extension direction and not reaching at least one of the end faces so as to separate and form a plurality of partial segments in the honeycomb formed article to obtain a honeycomb structure with slits, and
forming buffer portions disposed so as to infill the slits by filling a filler into the slits in the honeycomb structure with slits to obtain a honeycomb structure.

10. The method for manufacturing a honeycomb structure according to claim 9, wherein the plurality of slits are formed by starting cutting from a side face of the honeycomb formed article.
